# EUROPEAN PATENT APPLICATION

(11) **EP 2 921 942 A1**
(43) Date of publication of application: **23.09.2015**
(21) Application number: 13854812.8
(22) Date of filing: 13.08.2013
(51) Int. Cl.: G06F 3/048

(54) **TERMINAL, AND METHOD FOR CONTROLLING TERMINAL SCREEN DISPLAY INFORMATION**

(30) Priority: 16.11.2012 CN 201210465956; 27.11.2012 CN 201210492825
(71) Applicant: ZTE Corporation, Shenzhen, Guangdong 518057 (CN)
(72) Inventor: HAN, Yinjun, Shenzhen Guangdong 518057 (CN); GAO, Hong, Shenzhen Guangdong 518057 (CN); HUANG, Zhenjiang, Shenzhen Guangdong 518057 (CN); TU, Yaofeng, Shenzhen Guangdong 518057 (CN)
(74) Representative: Gervasi, Gemma
(86) International application number: PCT/CN2013/081372
(87) International publication number: WO 2014/075470

(57) **Abstract**

A terminal and a method for controlling terminal screen display information are provided. A terminal detects an operation instruction signal, determines that a desktop contraction and shift instruction is received according to the operation instruction signal, and controls a display screen to display, in a display screen subarea, desktop content contracted and shifted ro the display screen subarea. The terminal comprises a detection module and a control module. By controlling the contraction and restoration of the desktop of the terminal, the above-mentioned technical solution solves the problem that a large-screen terminal needs to be operated by two hands, and releases the other hand to do other things at the same time, thereby facilitating that the large-screen terminal can be flexibly operated by only one hand, which greatly improves the experience of a user using the large-screen terminal, and must be beneficial to the popularization of the large-screen terminal as well.

## Description

### Technical Field

The present invention relates to the technology field for controlling the terminal screen display information, and in particular, to a terminal and a method for controlling terminal screen display information.

### Background of the Related Art

The invention of the touch screen technology enables the electronic products applying the technology, such as, the mobile phone of the touch screen, the palmtop computer, the touch screen display, etc., have the prominent characteristics, such as, being easy and direct to operate. By utilizing the touch screen technology, the keyboard area on the original device is reduced, and the screen area is increased, which enables the small-size electronic product obtain a large display area.

As to the handheld terminal device, the common usage habit of people is to operate by a single hand, that is, to use the palm and four fingers except the thumb to hold the terminal and to use the idle thumb to perform the operation of pressing the button or the touch screen. In this way, another hand can be released to do other things when required on one hand; and on the other hand, the operation is more at will, flexible, convenient and easy when the mobile phone is held by a single hand.

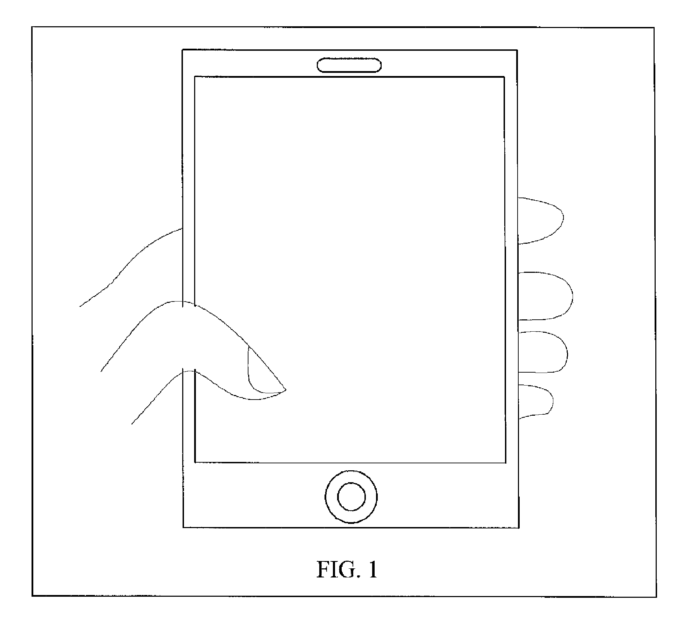

With the development of the electric technology and the constant pursuit to the visual effect by people, the screen of the terminal, for example, the mobile phone, the PDA, the palmtop computer, etc., is made larger and larger. As to the screen more than 4 inch, it is very difficult to perform operations by one hand. As shown in FIG. 1, the method of holding the large-screen terminal with a single hand is to use the palm and the four fingers except the thumb to hold the terminal and to use the idle thumb to perform the operation of the touch screen. The thumb is the shortest finger, and the controlled range is limited, so it is unable to perform the operation to the whole touch screen completely. In the face of the large-screen terminal, people have to change the existing habit of holding the mobile phone by the single hand and operating the mobile phone by the thumb, while they perform the operation through both hands; that is, one hand is holding the terminal, and another hand performs the operation to the touch screen. Particularly, the users, especially the office workers, will spend the riding time on and off duty to surf the internet with the electronic products, such as the mobile phone, etc.. However, one hand is required to hold the handle when people are in the standing state, and another hand not only needs to hold the mobile phone but also needs to perform the complete overall operation control to the display interface, which is obviously very difficult, and is very inconvenient to touch some far places in the screen, and is unable to achieve the objective of controlling the display interface.

### Content of the Invention

The technical problem that the embodiment of the present invention requires to solve is to provide a terminal and a method for controlling terminal screen display information, to solve the problem that it is inconvenient to operate the large-screen terminal by one hand.

In order to solve the above-mentioned technical problem, the following technical scheme is adopted.

A terminal, with a touch screen and a display screen, further comprises a detection module and a control module, wherein,
the detection module is configured to: detect an operation instruction signal, and notify the detected operation instruction signal to the control module; and
the control module is configured to: receive the operation instruction signal and determine that a desktop contraction and shift instruction is received according to the operation instruction signal, and control a display screen to display, in a display screen subarea, desktop content contracted and shifted to the display screen subarea.

Alternatively, the control module is further configured to:
for a touch event in the display screen subarea, provide a response of a same touch event at a corresponding position in the display screen when the desktop content is full-screen displayed.

Alternatively, the control module is further configured to:
after receiving the operation instruction signal and determining that a desktop restoration instruction is received according to the operation instruction signal, control the display screen to full-screen display content in the display screen subarea within a desktop area of the display screen.

Alternatively, the control module is configured to determine that the desktop contraction and shift instruction is received according to the operation instruction signal through the following mode: determining that the desktop contraction and shift instruction is received when analyzing out that the operation instruction signal is corresponding to a touch event to the touch screen and the touch event is a first preset touch event; and
the control module is further configured to: determine that the desktop restoration instruction is received when analyzing out that the operation instruction signal is corresponding to the touch event to the touch screen and the touch event is a second preset touch event.

Alternatively, the control module is configured to determine that the desktop contraction and shift instruction is received according to the operation instruction signal through the following mode: determining that the desktop contraction and shift instruction is received when analyzing out that the operation instruction signal is corresponding to a touch event to the touch screen and the touch event is a first preset touch event and a current display state of the touch screent is a desktop area display state; and
the control module is further configured to: determine that the desktop restoration instruction is received when analyzing out that the operation instruction signal is corresponding to the touch event to the touch screen and the touch event is a first preset touch event and a current display state of the touch screen is a display screen subarea display state.

Alternatively, the touch event refers to a touch event within a screen contraction and shift control button area on the touch screen.

Alternatively, the terminal comprises a screen contraction and shift control button apparatus;
the control module is configured to determine that the desktop contraction and shift instruction is received according to the operation instruction signal through the following mode: determining that the desktop contraction and shift instruction is received when analyzing out that the operation instruction signal is a trigger signaling of the screen contraction and shift control button apparatus and a current display state of the touch screent is a desktop area display state; and
the control module is further configured to: determine that the desktop restoration instruction is received when analyzing out that the operation instruction signal is the trigger signaling of the screen contraction and shift control button apparatus and a current display state of the touch screen is a display screen subarea display state.

Alternatively, a proportion of a length of the display screen subarea and a length of the display screen is same as a proportion of a width of the display screen subarea and a width of the display screen.

Alternatively, the display screen subarea is inscribed at a corner or a sideedge of the display screen, or a distance from a corner of the display screen subarea to a corresponding corner of the display screen is a preset length, or a distance of a sideedge of the display screen subarea with a corresponding sideedge of the display screen is a preset length.

A method for controlling terminal screen display information comprises:
a terminal detecting an operation instruction signal, determining that a desktop contraction and shift instruction is received according to the operation instruction signal, and controlling the display screen to display, in a display screen subarea, desktop content contracted and shifted to the display screen subarea.

Alternatively, the method further comprises:
for a touch event in the display screen subarea, the terminal providing a response of a same touch event at a corresponding position in the display screen when the desktop content is full-screen displayed.

Alternatively, the method further comprises:
after the terminal determines that a desktop restoration instruction is received according to the operation instruction signal, controlling the display screen to full-screen display content in the display screen subarea within a desktop area of the display screen.

Alternatively, the step of determining that the desktop contraction and shift instruction is received according to the operation instruction signal comprises: determining that the desktop contraction and shift instruction is received when the terminal analyzes out that the operation instruction signal is corresponding to a touch event to the touch screen and the touch event is a first preset touch event; and
the method further comprises: determining that the desktop restoration instruction is received when the terminal analyzes out that the operation instruction signal is corresponding to the touch event to the touch screen and the touch event is a second preset touch event.

Alternatively, the step of determining that the desktop contraction and shift instruction is received according to the operation instruction signal comprises: determining that the desktop contraction and shift instruction is received when the terminal analyzes out that the operation instruction signal is corresponding to a touch event to the touch screen and the touch event is a first preset touch event and a current display state of the touch screent is a desktop area display state; and
the method further comprises: determining that the desktop restoration instruction is received when the terminal analyzes out that the operation instruction signal is corresponding to the touch event to the touch screen and the touch event is a first preset touch event and a current display state of the touch screen is a display screen subarea display state.

Alternatively, the touch event refers to a touch event within a screen contraction and shift control button area on the touch screen.

Alternatively, the step of determining that the desktop contraction and shift instruction is received according to the operation instruction signal comprises: determining that the desktop contraction and shift instruction is received when the terminal analyzes out that the operation instruction signal is a trigger signaling of the screen contraction and shift control button apparatus and a current display state of the touch screent is a desktop area display state; and
the method further comprises: determining that the desktop restoration instruction is received when the terminal analyzes out that the operation instruction signal is the trigger signaling of the screen contraction and shift control button apparatus and the display state of the current touch event is a display screen subarea display state.

Alternatively, a proportion of a length of the display screen subarea and a length of the display screen is same as a proportion of a width of the display screen subarea and a width of the display screen.

Alternatively, the display screen subarea is inscribed at a corner or a sideedge of the display screen, or a distance from a corner of the display screen subarea to a corresponding corner of the display screen is a preset length, or a distance of a sideedge of the display screen subarea with a corresponding sideedge of the display screen is a preset length.

The above-mentioned technical solution, through controlling the contraction and restoration of the desktop of the terminal, solves the problem that the large-screen terminal requires two-hand operation, releases another hand to be able to do other things at the same time, and thus is convenient for the large-screen terminal to be able to perform flexible operation through one hand, greatly promotes the experience of using the large-screen terminal by the user, and must be beneficial to the promotion of the large-screen terminal.

### Brief Description of Drawings

FIG. 1 is a diagram of a holding method when a large-screen mobile phone is used by a single hand;
FIG. 2 is a structure diagram of a terminal in an embodiment;
FIG. 3 is a diagram of a method for controlling terminal screen display information in an embodiment;
FIG. 4 is a diagram of a full-screen desktop of a terminal in embodiment one and two;
FIG. 5 is a diagram of contracted displaying of an original desktop of a terminal in embodiment one;
FIG. 6 is a diagram of contracted displaying of an original desktop of a terminal in embodiment two.

### Preferred Embodiments of the Present Invention

It should be illustrated that, in the case of not conflicting, the embodiments in the present application and features in these embodiments can be combined with each other.

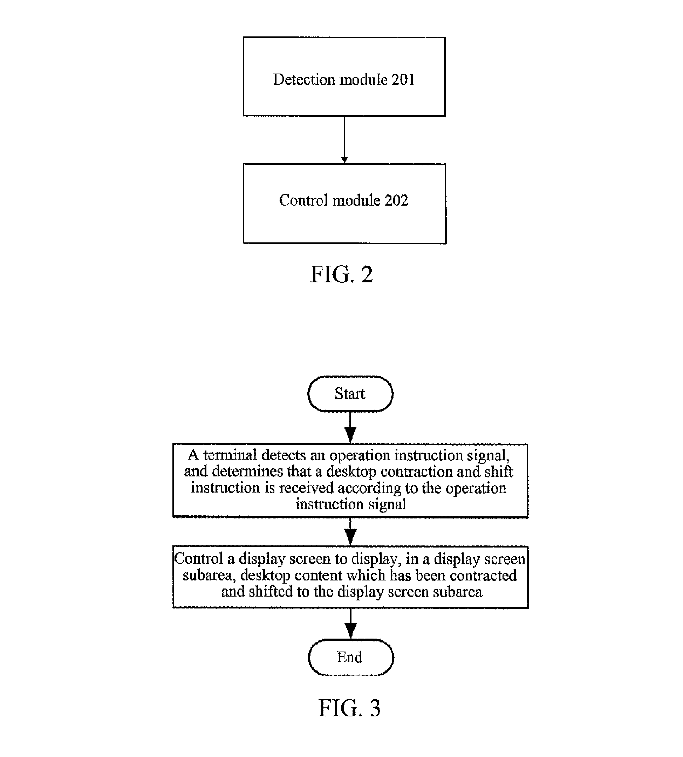

As shown in FIG. 2, the terminal with a touch screen and a display screen in the embodiment of the present invention includes a detection module 201 and a control module 202.

The detection module 201 is configured to: detect an operation instruction signal, and notify the detected operation instruction signal to the control module.

The control module 202 is configured to: receive the operation instruction signal and determine that a desktop contraction and shift instruction is received according to the operation instruction signal, and control a display screen to display, in a display screen subarea, desktop content contracted and shifted to the display screen subarea.

The touch screen of the present terminal can be glued and connected on the display screen, or the two are a combined screen, or the position of the display screen subarea is the touch screen.

The display screen subarea refers to a subarea of the display screen which is default or set as needed by the user. The display screen subarea is inscribed at a corner or a sideedge of the display screen, which can be defaultly inscribed at a lower left corner or an upper left corner of the display screen, or be defaultly inscribed at a lower right corner or a lower left corner of the display screen, or be defaultly, or be defaultly inscribed at a middle position of the left sideedge of the display screen, or be defaultly inscribed at a middle position of the right sideedge of the display screen. Or a distance from a corner of the display screen subarea to a corresponding corner of the display screen is a preset length, or a distance from a sideedge of the display screen subarea to a corresponding sideedge of the display screen is a preset length.

The original desktop content includes the desktop background and the control icon information, and the control icon information includes the icon pattern and the position information of the effective area of the point touch of the icon. The display screen subarea content information of the contracted desktop content displayed in the display screen subarea includes the contracted desktop background and the control icon information, and the control icon information includes the contracted icon pattern and the position information of the effective area of the point contact of the icon in the display screen subarea.

The control module 202 is further configured to: for a touch event in the display screen subarea, provide a response of a same touch event at a corresponding position in the display screen when the desktop content is full-screen displayed. After the original desktop content is contracted and shifted to the display screen subarea for display, the user can touch every control in the display screen subarea, and the terminal provides the corresponding response, thus not influencing the effective operation control to the terminal by the user.

The desktop content can be contracted on the display screen according to the proportion of the display screen, that is, a proportion of a length of the display screen subarea and a length of the display screen is the same as a proportion of a width of the display screen subarea and a width of the display screen. Alternatively, the length and the width of the display screen subarea are preset fixed values (such as, a standard 3.5-inch screen area), or the length and the width of the display screen subarea are the values which can be set and modified by the user.

The above-mentioned terminal supports contracting the desktop content of the terminal into the display screen subarea of which the position is easy to operate by the user, which facilitates the user to operate the terminal by one hand.

The terminal contracts the desktop content into the display screen subarea of which the position is easy to operate by the user, and the terminal can resume the original state of full-screen displaying the desktop after the user operation is complete. The control module is configured to: after receiving the operation instruction signal and determining that a desktop restoration instruction is received according to the operation instruction signal, control the display screen to full-screen display content in the display screen subarea within a desktop area of the display screen.

The event corresponding to the operation instruction signal includes but not limited to the three following modes:
1), a specific gesture operation event in the whole touch screen range or in a preset touch screen range, such as, a single point contact event, a single point long-press event, a multi-point contact event, a sliding event, a closed path touch event and a broken line path touch event.
2), the touch event in the screen contraction and shift control button area which is generally the single point contact event. The screen contraction and shift control button area can be set in default or set according to the needs of the user. The position of the area is fixed or suspended and movable, and the soft key button can also be displayed in the screen contraction and shift control button area, which is convenient for the user to use.
3), the operation event to the original hardware key or the specialized hardware key on the terminal.

It is illustrated in detail through three embodiments hereinafter.

### Embodiment one

The desktop contraction and desktop restoration of the terminal are controlled through different touch events of the touch screen.

The control module is configured to determine that the desktop contraction and shift instruction is received when analyzing out that the operation instruction signal is corresponding to a touch event to the touch screen and the touch event is a first preset touch event; and determine that the desktop restoration instruction is received when analyzing out that the operation instruction signal is corresponding to the touch event to the touch screen and the touch event is a second preset touch event.

Wherein, the first preset touch event can be a clockwise or counterclockwise closed path touch event, and the second preset touch event can be a closed path touch event which is in the counterclockwise direction of the first preset touch event. Or, the first preset touch event and the second preset touch event are different, and the first preset touch event and the second preset touch event are one of the following events: a single point contact event, a single point long-press event, a multi-point contact event, a sliding event and a closed path touch event.

### Embodiment two

The desktop contraction and desktop restoration of the terminal are controlled through one same touch event of the touch screen.

The control module 202 is specifically configured to determine that the desktop contraction and shift instruction is received when analyzing out that the operation instruction signal is corresponding to a touch event to the touch screen and the touch event is the first preset touch event and the current display state of the touch screen is a desktop area display state; and further specifically configured to: determine that the desktop restoration instruction is received when analyzing out that the operation instruction signal is corresponding to the touch event to the touch screen and the touch event is a first preset touch event and the current display state of the touch screen is a display screen subarea display state. The first preset touch event is one of the following events: the single point contact event, the single point long-press event, the multi-point contact event, the sliding event and the closed path touch event.

In the variable embodiments of embodiment one, the control module also can determine the desktop contraction and shift instruction and the desktop restoration instruction by combining with the display state of the display screen.

### Embodiment three

The screen contraction and shift control button area on the touch screen is set, and the soft key button is displayed in the screen contraction and shift control button area. Or, the desktop contraction and shift and the desktop restoration of the terminal are controlled through the screen contraction and shift control button apparatus of the hardware on the terminal, that is, a hardware button apparatus is set for the function of the desktop contraction and shift and the desktop restoration. The apparatus can be a dedicated apparatus and also can be an original button apparatus in the shared terminal. The control module is specifically configured to determine that the desktop contraction and shift instruction is received when analyzing out that the operation instruction signal is a trigger signaling of the screen contraction and shift control button apparatus and the current display state of the touch screen is the desktop area display state; and further specifically configured to: determine that the desktop restoration instruction is received when analyzing out that the operation instruction signal is the trigger signaling of the screen contraction and shift control button apparatus and the current display state of the touch screen is the display screen subarea display state.

When the user switches the terminal between the left hand and the right hand, the terminal can realize the left and right switchover of the display screen subarea. For example, when the user holds the terminal with the right hand, the display screen subarea is located in the right side of the display screen, and the terminal displays, on the left side of the display screen subarea, an indication sign pointing to the left side (such as, a left arrow) used for representing that the terminal supports to switch the display screen subarea to the left side. For example, when the user holds the terminal with the left hand, the display screen subarea is located in the left side of the display screen, and the terminal displays, on the right side of the display screen subarea, an indication sign pointing to the right side (such as, a right arrow) representing that the terminal supports to switch the display screen subarea to the right side. In order to help the terminal distinguish whether the user uses the left hand or the right hand to hold the terminal, the terminal can include a touch induction apparatus connected with the control module. The touch induction apparatus is used for inducting the contact signal of the human body and then sending the induction signal to the control module; the control module is used for setting the display screen subarea be inscribed at the lower left corner or the left sideedge of the display screen when determining that the terminal is located in the left hand of the user according to the received induction signal; and setting the display screen subarea be inscribed at the lower right corner or the right sideedge of the display screen when determining that the terminal is located in the right hand of the user according to the received induction signal.

As shown in FIG. 3, the method for controlling terminal screen display information includes: a terminal detecting an operation instruction signal, determining that a desktop contraction and shift instruction is received according to the operation instruction signal, and controlling the display screen to display, in a display screen subarea, desktop content contracted and shifted to the display screen subarea.

The display screen subarea refers to a subarea of the display screen which is default or set as needed by the user. The display screen subarea is inscribed at a corner or a sideedge of the display screen, which can be defaultly inscribed at a lower left corner or an upper left corner of the display screen, or be defaultly inscribed at a lower right corner or a lower left corner of the display screen, or be defaultly, or be defaultly inscribed at a middle position of the left sideedge of the display screen, or be defaultly inscribed at a middle position of the right sideedge of the display screen. Or a distance from a corner of the display screen subarea to a corresponding corner of the display screen is a preset length, or a distance from a sideedge of the display screen subarea to a corresponding sideedge of the display screen is a preset length.

The original desktop content includes the desktop background and the control icon information, and the control icon information includes the icon pattern and the position information of the effective area of point touch of the icon. The display screen subarea content information of the contracted desktop content displayed in the display screen subarea includes the contracted desktop background and the control icon information, and the control icon information includes the contracted icon pattern and the position information of the effective area of the point contact of the icon in the display screen subarea.

The terminal, for a touch event in the display screen subarea, provides a response of a same touch event at a corresponding position in the display screen when the desktop content is full-screen displayed. After the original desktop content is contracted and shifted in the display screen subarea for display, the user can touch every control in the display screen subarea, and the terminal provides the corresponding response, thus not influencing the effective operation control to the terminal by the user.

The desktop content can be contracted on the display screen according to the proportion of the display screen, that is, a proportion of a length of the display screen subarea and a length of the display screen is same as a proportion of a width of the display screen subarea and a width of the display screen. Alternatively, the length and the width of the display screen subarea are preset fixed values (such as, a standard 3.5-inch screen area), or the length and the width of the display screen subarea are the values which can be set and modified by the user.

The present method supports contracting the desktop content of the terminal into the display screen subarea of which the position is easy to operate by the user, which facilitates the user to operate the terminal by one hand.

The terminal contracts the desktop content into the display screen subarea of which the position is easy to operate by the user, and the terminal can resume the original state of full-screen displaying the desktop after the user operation is complete. The terminal, after receiving the operation instruction signal and determining that a desktop restoration instruction is received according to the operation instruction signal, controls the display screen to full-screen display content in the display screen subarea within a desktop area of the display screen.

The operation instruction signal is the touch event which is default or set by the user according to using requirement or the control event of the button apparatus of the hardware. The three embodiments for realization are same with the descriptions of the technical characteristic contents of the above-mentioned terminal, which will not go into details here.

It is illustrated through the specific embodiments hereinafter.

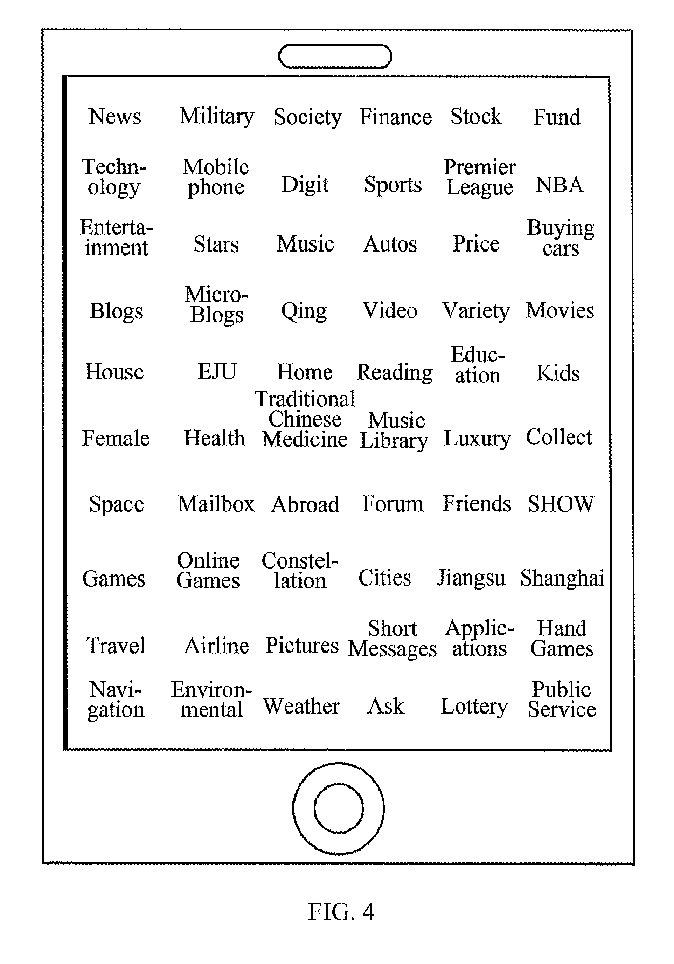

As shown in FIG. 4, under the normal conditions, when the large-screen mobile phone is displayed in the full screen, it will display at the whole screen, and the thumb can only control limited range when it is operated by one hand. If the user expects to operate the position of the upper left corner of the screen when holding the large-screen terminal by using the right hand, the situation of difficult operation will appear.

### Specific embodiment one

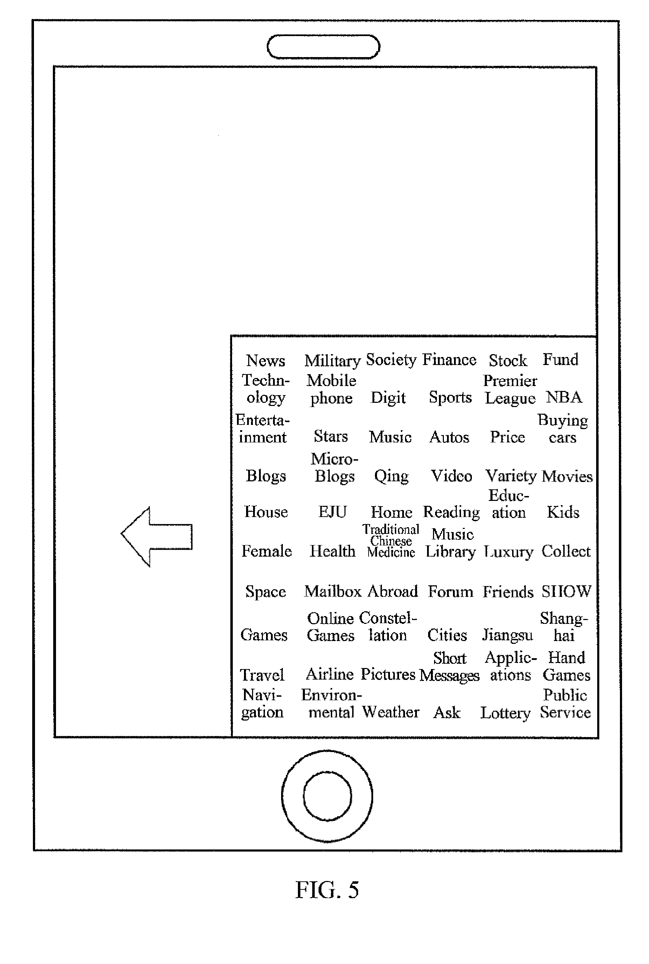

The mobile phone terminal, according to the length of the display screen subarea set by the user, is shown as FIG. 5, and the terminal defaults the position of the display screen subarea to be inscribed at the lower right corner of the display screen.

The terminal defaults that the clockwise closed path touch event on the touch screen is corresponding to the desktop contraction and shift instruction signal and the anticlockwise closed path touch event on the touch screen is corresponding to the desktop restoration instruction signal. The storage module in the terminal is used for storing this corresponding relationship.

Or, the storage module in the terminal stores multiple events corresponding to the desktop contraction and shift instruction signal and multiple events corresponding to the desktop restoration instruction signal, which are provided by the mobile phone terminal to the user, and the user selects therefrom and confirms that the clockwise closed path touch event on the touch screen is corresponding to the desktop contraction and shift instruction signal and the anticlockwise closed path touch event on the touch screen is corresponding to the desktop restoration instruction signal.

The user draws a circle clockwise on the touch screen when operating the mobile phone terminal, and the terminal detects it as the desktop contraction and shift instruction signal and displays the desk-top content as shown in FIG. 5.\, which is displayed in the range that can be controlled by the thumb of the user in the lower right corner of the screen; and after corresponding operation is performed in the display screen subarea, for example, clicking and contacting the "news" icon, then the "news" icon in the display screen subarea is shown as the clicked state. The user draws a circle anticlockwise on the touch screen, the terminal detects it as the desktop restoration instruction signal, and the content in the display screen subarea is regarded as the desktop content and displayed in the whole screen; wherein, the "news" icon is shown as the clicked state.

### Specific embodiment two

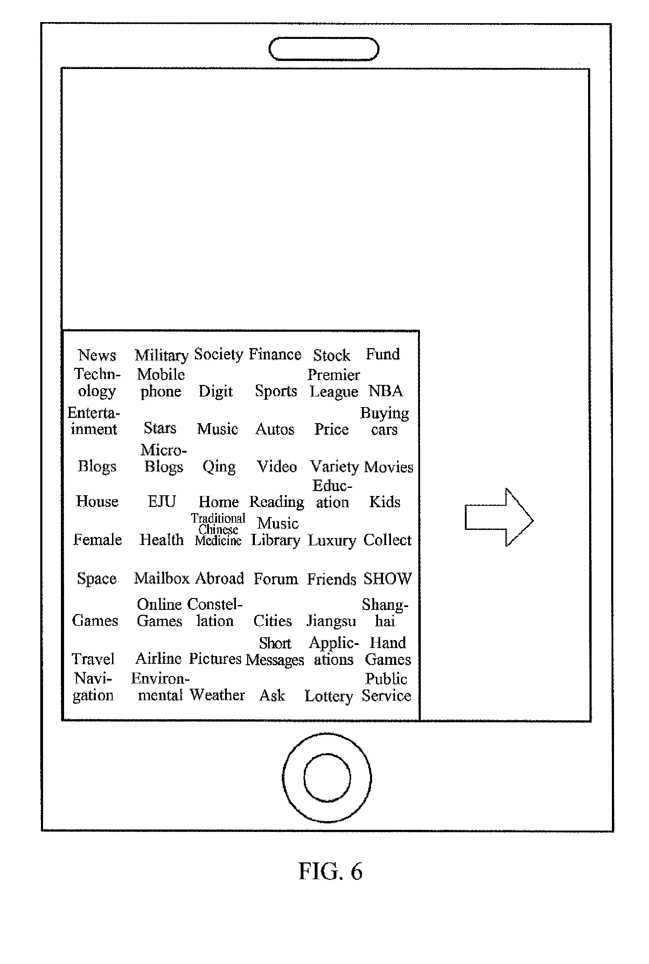

The terminal, according to the length of the display screen subarea set by the user, is shown as FIG. 6, and the terminal defaults the position of the display screen subarea to be inscribed at the lower left corner of the display screen. The user clicks the screen contraction and shift control button when operating the mobile phone, and the terminal detects it as the desktop contraction and shift instruction signal and displays the desk-top content as shown in FIG. 6., which is displayed in the range that can be controlled by the thumb of the user in the lower left corner of the screen; and after corresponding operation is performed in the display screen subarea, for example, clicking and contacting the "news" icon, then the "news" icon in the display screen subarea is shown as the clicked state. The user clicks the screen contraction and shift control button again, the terminal detects it as the desktop restoration instruction signal, and the content in the display screen subarea is regarded as the desktop content and displayed in the whole screen; wherein, the "news" icon is shown as the clicked state.

In the above-mentioned specific embodiments one and two, when the touch induction apparatus is set in the terminal and the user switches the terminal between the left hand and the right hand, the terminal can realize the switchover of the display screen subarea from left to right. That is, when the user holds the terminal with the right hand, it is shown in FIG. 5, and when the user holds the terminal with the left hand, it is shown in FIG. 6.

Through the present scheme, it can be effective to perform the one-hand operation to the large-screen terminal, which greatly promotes the one-hand operation experience of the user to the large-screen terminal.

Obviously, the present invention can have a variety of other embodiments. Those skilled in the art can make the corresponding modifications and variations according to the present invention without departing from the spirit and essence of the present invention. And all of these modifications or the variations should be embodied in the scope of the appending claims of the present invention.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

### Industrial Applicability

The above-mentioned technical solution, through controlling the contraction and restoration of the desktop of the terminal, solves the problem that the large-screen terminal requires two-hand operation, releases another hand to be able to do other things at the same time, and thus is convenient for the large-screen terminal to be able to perform flexible operation through one hand, greatly promotes the experience of using the large-screen terminal by the user, and must be beneficial to the promotion of the large-screen terminal. Therefore, the present invention has very strong industrial applicability.

## Claims

1. A terminal, with a touch screen and a display screen, further comprising a detection module and a control module, wherein,
the detection module is configured to: detect an operation instruction signal, and notify the detected operation instruction signal to the control module; and
the control module is configured to: receive the operation instruction signal and determine that a desktop contraction and shift instruction is received according to the operation instruction signal, and control the display screen to display, in a display screen subarea, desktop content contracted and shifted to the display screen subarea.

2. The terminal according to claim 1, wherein, the control module is further configured to:
for a touch event in the display screen subarea, provide a response of a same touch event at a corresponding position in the display screen when the desktop content is full-screen displayed.

3. The terminal according to claim 1 or 2, wherein, the control module is further configured to:
after receiving the operation instruction signal and determining that a desktop restoration instruction is received according to the operation instruction signal, control the display screen to full-screen display content in the display screen subarea within a desktop area of the display screen.

4. The terminal according to claim 3, wherein,
the control module is configured to determine that the desktop contraction and shift instruction is received according to the operation instruction signal through the following mode: determining that the desktop contraction and shift instruction is received when analyzing out that the operation instruction signal is corresponding to a touch event to the touch screen and the touch event is a first preset touch event; and
the control module is further configured to: determine that the desktop restoration instruction is received when analyzing out that the operation instruction signal is corresponding to the touch event to the touch screen and the touch event is a second preset touch event.

5. The terminal according to claim 3, wherein,
the control module is configured to determine that the desktop contraction and shift instruction is received according to the operation instruction signal through the following mode: determining that the desktop contraction and shift instruction is received when analyzing out that the operation instruction signal is corresponding to a touch event to the touch screen and the touch event is a first preset touch event and a current display state of the display screen is a desktop area display state; and
the control module is further configured to: determine that the desktop restoration instruction is received when analyzing out that the operation instruction signal is corresponding to the touch event to the touch screen and the touch event is a first preset touch event and a current display state of the touch screen is a display screen subarea display state.

6. The terminal according to claim 5, wherein,
the touch event refers to a touch event within a screen contraction and shift control button area on the touch screen.

7. The terminal according to claim 3, wherein,
the terminal comprises a screen contraction and shift control button apparatus;
the control module is configured to determine that the desktop contraction and shift instruction is received according to the operation instruction signal through the following mode: determining that the desktop contraction and shift instruction is received when analyzing out that the operation instruction signal is a trigger signaling of the screen contraction and shift control button apparatus and a current display state of the touch screen is a desktop area display state; and
the control module is further configured to: determine that the desktop restoration instruction is received when analyzing out that the operation instruction signal is the trigger signaling of the screen contraction and shift control button apparatus and a current display state of the touch screen is a display screen subarea display state.

8. The terminal according to claim 3, wherein,
a proportion of a length of the display screen subarea and a length of the display screen is same as a proportion of a width of the display screen subarea and a width of the display screen.

9. The terminal according to claim 3, wherein,
the display screen subarea is inscribed at a corner or a sideedge of the display screen, or a distance from a corner of the display screen subarea to a corresponding corner of the display screen is a preset length, or a distance of a sideedge of the display screen subarea with a corresponding sideedge of the display screen is a preset length.

10. A method for controlling terminal screen display information, comprising:
a terminal detecting an operation instruction signal, determining that a desktop contraction and shift instruction is received according to the operation instruction signal, and controlling the display screen to display, in a display screen subarea, desktop content contracted and shifted to the display screen subarea.

11. The method according to claim 10, further comprising:
for a touch event in the display screen subarea, the terminal providing a response of a same touch event at a corresponding position in the display screen when the desktop content is full-screen displayed.

12. The method according to claim 10 or 11, further comprising:
after the terminal determines that a desktop restoration instruction is received according to the operation instruction signal, controlling the display screen to full-screen display content in the display screen subarea within a desktop area of the display screen.

13. The method according to claim 12, wherein,
the step of determining that the desktop contraction and shift instruction is received according to the operation instruction signal comprises: determining that the desktop contraction and shift instruction is received when the terminal analyzes out that the operation instruction signal is corresponding to a touch event to the touch screen and the touch event is a first preset touch event; and
the method further comprises: determining that the desktop restoration instruction is received when the terminal analyzes out that the operation instruction signal is corresponding to the touch event to the touch screen and the touch event is a second preset touch event.

14. The method according to claim 12, wherein,
the step of determining that the desktop contraction and shift instruction is received according to the operation instruction signal comprises: determining that the desktop contraction and shift instruction is received when the terminal analyzes out that the operation instruction signal is corresponding to a touch event to the touch screen and the touch event is a first preset touch event and a current display state of the touch screen is a desktop area display state; and
the method further comprises: determining that the desktop restoration instruction is received when the terminal analyzes out that the operation instruction signal is corresponding to the touch event to the touch screen and the touch event is a first preset touch event and a current display state of the touch screen is a display screen subarea display state.

15. The method according to claim 14, wherein,
the touch event refers to a touch event within a screen contraction and shift control button area on the touch screen.

16. The method according to claim 12, wherein,
the step of determining that the desktop contraction and shift instruction is received according to the operation instruction signal comprises: determining that the desktop contraction and shift instruction is received when the terminal analyzes out that the operation instruction signal is a trigger signaling of the screen contraction and shift control button apparatus and a current display state of the touch screen is a desktop area display state; and
the method further comprises: determining that the desktop restoration instruction is received when the terminal analyzes out that the operation instruction signal is the trigger signaling of the screen contraction and shift control button apparatus and the display state of the current touch event is a display screen subarea display state.

17. The method according to claim 12, wherein,
a proportion of a length of the display screen subarea and a length of the display screen is same as a proportion of a width of the display screen subarea and a width of the display screen.

18. The method according to claim 12, wherein,
the display screen subarea is inscribed at a corner or a sideedge of the display screen, or a distance from a corner of the display screen subarea to a corresponding corner of the display screen is a preset length, or a distance of a sideedge of the display screen subarea with a corresponding sideedge of the display screen is a preset length.
